# EUROPÄISCHE PATENTSCHRIFT

(11) **EP 2 118 465 B1**
(45) Veröffentlichungstag und Bekanntmachung des Hinweises auf die Patenterteilung: **24.11.2010**
(21) Anmeldenummer: 08716910.8
(22) Anmeldetag: 18.02.2008
(51) Int. Cl.: F02B 27/02, F02D 9/14

(54) **SAUGROHRANORDNUNG FÜR BRENNKRAFTMASCHINEN**
INTAKE MANIFOLD ARRANGEMENT FOR INTERNAL COMBUSTION ENGINES
COLLECTEUR D'ADMISSION POUR MOTEUR À COMBUSTION INTERNE

(30) Priorität: 21.02.2007 DE 102007008545
(43) Veröffentlichungstag der Anmeldung: 18.11.2009
(73) Patentinhaber: Kreyer, Norbert, 56651 Niederzissen (DE)
(72) Erfinder: Kreyer, Norbert, 56651 Niederzissen (DE)
(74) Vertreter: von Kreisler Selting Werner
(86) Internationale Anmeldenummer: PCT/EP2008/051945
(87) Internationale Veröffentlichungsnummer: WO 2008/101901

(56) Entgegenhaltungen:
- EP-A- 1 555 464
- WO-A-97/35103
- DE-A1- 19 737 729
- DE-A1-102004 030 023
- DE-U1-202005 012 790
- JP-A- 1 267 313
- JP-A- 59 218 329

## Beschreibung

Die Erfindung betrifft eine Saugrohranordnung für Brennkraftmaschinen.

Über Saugrohre wird den Verbrennungsräumen von Brennkraftmaschinen, wie insbesondere Ottomotoren, das Verbrennungsgemisch zugeführt. Hierbei kann die Leistung der Brennkraftmaschine durch die Veränderung der Länge des Ansaugkanals in Abhängigkeit der Drehzahl gesteigert bzw. der Brennstoffverbrauch verringert werden.

Zum Variieren der Länge des Ansaugkanals sind eine Vielzahl von Saugrohranordnungen bekannt. Derartige Saugrohranordnungen sind häufig komplex aufgebaut. Beispielsweise ist es aus DE 43 08 805 bekannt, zusätzlich zum Ansaugkanal einen Nebeneinlasskanal vorzusehen. In dem Nebeneinlasskanal ist eine Drosseleinrichtung angeordnet, bei der es sich um einen Drehschieber handelt. Hierdurch kann die zusätzlich dem Verbrennungsraum durch den Nebeneinlasskanal zugeführte Menge an Luft variiert werden. Das Vorsehen eines Nebeneinlasskanals ist technisch aufwändig und erfordert einen relativ großen Platzbedarf.

Aus DE 20 2005 012 790 ist eine Saugrohranordnung für Brennkraftmaschinen bekannt. Das spiralförmig ausgebildete Saugrohr weist neben einer Hauptansaugöffnung am Saugrohreintritt eine seitlich in der Saugrohrwand angeordnete Nebenansaugöffnung auf. Diese ist durch einen verschiebbaren Sperrschieber öffen- und verschließbar.

Aufgabe der Erfindung ist es, eine Saugrohranordnung für Brennkraftmaschinen mit veränderbarer wirksamer Länge des Ansaugkanals zu schaffen, die einen einfachen und kostengünstigen Aufbau aufweist.

Die Lösung der Aufgabe erfolgt erfindungsgemäß durch die Merkmale des Anspruchs 1.

Der Erfindung liegt die überraschende Erkenntnis zu Grunde, dass die Leistung einer Brennkraftmaschine bereits erheblich gesteigert werden kann, wenn ein Ansaugkanal mit zwei unterschiedlichen wirksamen Längen realisiert ist. Es ist somit bei sehr guter Leistungssteigerung ausreichend, eine Saugrohranordnung zu schaffen, die zwei Betriebszustände, einen mit einem kürzen und einen mit einem längeren Ansaugkanal, aufweist. Bei der erfindungsgemäßen Saugrohranordnung handelt es sich somit um eine Saugrohranordnung mit einer Zweipunktverstellung.

Die erfindungsgemäße Saugrohranordnung weist einen mit einem Verbrennungsraum der Brennkraftmaschine verbindbaren Ansaugkanal zum Zuführen eines Verbrennungsgemisches oder Luft auf. Hierbei kann ein gemeinsamer Ansaugkanal für mehrere Verbrennungsräume oder auch je Verbrennungsraum ein gesonderter Ansaugkanal vorgesehen sein. Der Ansaugkanal weist eine Hauptansaugöffnung sowie eine Nebenansaugöffnung auf. In einem ersten Betriebszustand wird dem Ansaugkanal Luft durch die Hauptansaugöffnung und in einem zweiten Betriebszustand durch die Nebenansaugöffnung zugeführt. Hierbei kann zusätzlich zur Luft Brennstoff durch die entsprechende Ansaugöffnung zugeführt werden. Ebenso kann ein zuvor hergestelltes Luft-Brennstoff-Gemisch durch die entsprechende Ansaugöffnung zugeführt werden.

Erfindungsgemäß ist innerhalb des Ansaugkanals eine Schließeinrichtung verschiebbar angeordnet. Durch Verschieben der Schließeinrichtung kann die Neben- oder Hauptansaugöffnung geschlossen oder geöffnet werden. Somit ist es durch einfaches Hin- und Herschieben der Schließeinrichtung möglich, die Saugrohranordnung zwischen dem ersten und zweiten Betriebszustand zu schalten.

Erfindungsgemäß ist die Haupt- und/ oder die Nebenansaugöffnung in einem der beiden Betriebszustände durch die Schließeinrichtung verschließbar. Dies ist in besonders bevorzugter Ausführungsform möglich, wenn die entsprechende Ansaugöffnung in einer Seitenwand des Ansaugkanals vorgesehen ist und die Öffnung bei in den Ansaugkanal eingeschobener Schließeinrichtung verschlossen ist. Hierbei erfolgt das Verschließen der in einer Seitenwand des Ansaugkanals angeordneten Ansaugöffnung durch eine Seitenwand der insbesondere zylindrischen Schließeinrichtung mit beispielsweise rundem, ovalem, elliptischem oder rechteckigem Querschnitt.

Erfindungsgemäß strömt die Luft oder das Verbrennungsgemisch durch die Schließeinrichtung hindurch, so dass die Schließeinrichtung in einem der Betriebszustände einen Teil des Ansaugkanals bildet. Hierzu weist die Schließeinrichtung eine Öffnung auf, die im ersten Betriebszustand die Hauptansaugöffnung bildet. Vorzugsweise erstreckt sich die Öffnung der Schließeinrichtung über den gesamten Querschnitt, so dass die Öffnungsebene senkrecht zur Längsachse der Schließeinrichtung verläuft. In besonders bevorzugter Ausführungsform kann die Öffnung der Schließeinrichtung insbesondere im zweiten Betriebszustand durch ein Schließelement verschlossen werden. Hierbei kann es sich um ein gesondert ansteuerbares Schließelement, wie eine Klappe, handeln. In bevorzugter Ausführungsform ist das Schließelement stationär. Das Verschließen der Öffnung erfolgt durch Verschieben der Schließeinrichtung. Hierbei liegt vorzugsweise ein kreisrunder, ovaler, elliptischer oder rechteckiger Rand, der die Öffnung der Schließeinrichtung umgibt, an dem Schließelement an. Das Schließelement kann beispielsweise eine Wand oder ein anderer Teil eines Motorgehäuses sein.

Bei einer besonders bevorzugten Ausführungsform ist die Schließeinrichtung derart ausgebildet, dass die Hauptansaugöffnung in der Schließeinrichtung vorgesehen ist. Erfindungsgemäß ist es bevorzugt, dass die Hauptansaugöffnung beim Verschieben der Schließeinrichtung zum Öffnen der Nebenansaugöffnung automatisch verschlossen wird. Jeweils in jedem Betriebszustand ist somit stets nur eine der beiden Öffnungen, die Hauptansaugöffnung oder die Nebenansaugöffnung geöffnet. Hierdurch ist es auf einfache Weise möglich, bei geöffneter Hauptansaugöffnung insbesondere einen geraden ungekrümmten Ansaugkanal zu realisieren, so dass maximale Motorleistungen erzielt werden können. Bei verschobener Schließeinrichtung und somit verschlossener Haupt- und geöffneter Nebenansaugöffnung erfolgt das Ansaugen vorzugsweise über einen Seitenkanal bzw. einen Ansaugstutzen, so dass der Ansaugkanal länger ist. Dies führt dazu, dass ein maximales Drehmoment erzeugt werden kann.

Vorzugsweise ist die Schließeinrichtung rohrförmig ausgebildet und weist insbesondere einen kreiszylindrischen Querschnitt auf. Selbstverständlich sind auch andere Querschnitte, wie elliptisch, oval oder rechteckig, möglich. Hierbei liegt die Schließeinrichtung vorzugsweise am gesamten Umfang an einer Innenwand des Ansaugkanals an. Vorzugsweise erstreckt sich die Anlagefläche im Wesentlichen über die gesamte Länge der Schließeinrichtung, wenn die Schließeinrichtung in den Ansaugkanal eingeschoben ist. Hierdurch ist eine gute Führung der Schließeinrichtung sowie eine ausreichende Abdichtung gewährleistet.

Bei einer besonders bevorzugten Ausführungsform trägt das Schließelement eine Einspritzeinrichtung. Die Einspritzeinrichtung ragt hierbei in die insbesondere zylindrische Schließeinrichtung hinein, wenn die Schließeinrichtung zum Verschließen der Öffnung an dem Schließelement anliegt. Wenn die Schließeinrichtung nicht an dem Schließelement anliegt und somit die Öffnung des Schließelements offen ist, kann die Einspritzeinrichtung ebenfalls noch in die Schließeinrichtung hineinragen oder der Öffnung gegenüberliegend angeordnet sein. Hierdurch ist eine äußerst kompakte Bauweise möglich.

Nachfolgend wird die Erfindung anhand einer bevorzugten Ausführungsform unter Bezugnahme auf die anliegende Zeichnung erläutert.

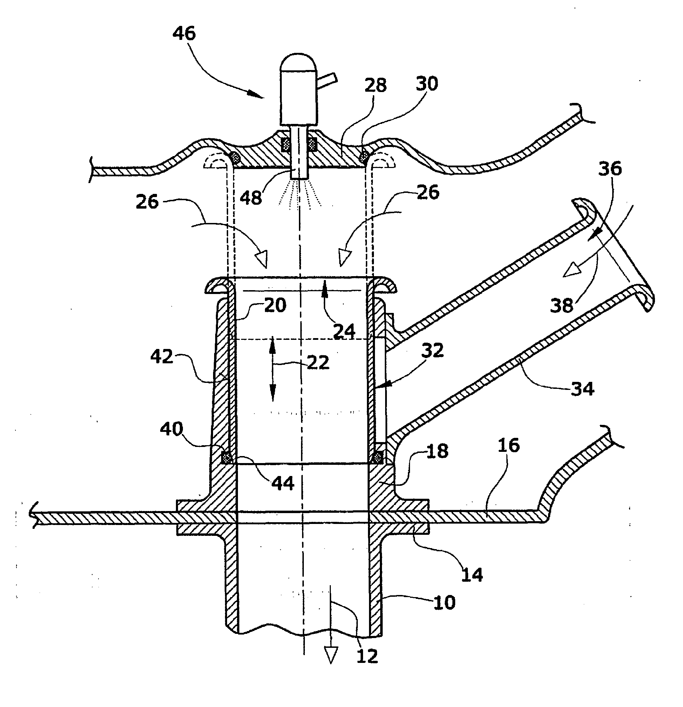

Die Figur zeigt eine Schnittansicht einer Saugrohranordnung.

Durch einen Ansaugkanal 10 strömt in Richtung eines Pfeils 12 ein Verbrennungsgemisch in Richtung eines nicht dargestellten Verbrennungsraums. Der in der Zeichnung untere, d.h. in Richtung des Verbrennungsraums führende Teil des Ansaugkanals 10 ist über einen Flansch 14 mit einem Gehäuse 16 verbunden. An den Ansaugkanal 10 schließt sich ein weiterer Ansaugkanal 18 an, der ebenfalls mit dem Gehäuse verbunden ist und koaxial zu dem Ansaugkanal 10 angeordnet ist.

In dem in der Figur oberen Ansaugkanal 16 ist eine Schließeinrichtung 20 angeordnet. Die Schließeinrichtung 20 ist in Richtung eines Pfeils 22 in dem Ansaugkanal 18 verschiebbar, wobei die Schließeinrichtung 20 aus dem in der Figur in durchgezogener Linie dargestellten ersten Betriebszustand lediglich nach oben in den in gestrichelter Linie dargestellten zweiten Betriebszustand verschiebbar ist.

Die Schließeinrichtung 20 weist eine Öffnung 24 auf. Die Öffnung 24 weist einen kreisförmigen Querschnitt auf und erstreckt sich über die gesamte Radialfläche der einen kreiszylindrischen Querschnitt aufweisenden, rohrförmigen Schließeinrichtung. Im ersten Betriebszustand (durchgezogene Linie) handelt es sich bei der Öffnung 24 um die Hauptansaugöffnung, durch die Luft in Richtung eines Pfeils 26 in den Ansaugkanal 18 gesaugt wird. Der Ansaugkanal weist somit im ersten Betriebszustand eine einzige Öffnung, die Hauptansaugöffnung 24, auf.

Durch Verschieben der Schließeinrichtung durch ein nicht dargestelltes, insbesondere elektrisch, pneumatisch, hydraulisch oder mechanisch betätigbares Stellelement in den zweiten Betriebszustand (gestrichelte Darstellung), erfolgt ein Verschließen der Hauptansaugöffnung 24. Dies geschieht dadurch, dass in dem zweiten Betriebszustand die Öffnung 24 durch ein Schließelement 28 verschlossen wird. Das Schließelement 28 ragt in die Öffnung 24 hinein. Ferner weist das Schließelement 28 einen am Umfang angeordneten Dichtring 30 auf.

Durch Verschieben der Schließeinrichtung 20 in die Stellung des zweiten Betriebszustands (gestrichelt) erfolgt ein Öffnen einer Nebenansaugöffnung 32. Die Nebenansaugöffnung 32 ist in einer Seitenwand des zylindrischen Ansaugkanals 18 angeordnet. Die Seitenwand des Ansaugkanals 18 ist mit einem Ansaugstutzen 34 verbunden. Der Ansaugstutzen 34 weist eine Öffnung 36 auf, so dass in dem zweiten Betriebszustand (gestrichelt) Luft in Richtung eines Pfeils 38 durch die Öffnung 36 in den Ansaugstutzen 34 strömt. Die Luft strömt sodann durch die Nebenansaugöffnung 32 in den Ansaugkanal 18 und gelangt sodann wiederum in Richtung eines Pfeils 12 zu dem Verbrennungsraum der Brennkraftmaschine. Wie aus der Figur ersichtlich ist, ist die wirksame Länge der Saugrohre im ersten und zweiten Betriebszustand unterschiedlich. So ist die Länge im zweiten Betriebszustand, in dem die Luft durch den Ansaugstutzen 34 angesaugt wird, deutlich größer.

Die Schließeinrichtung 20, deren Außendurchmesser bei einer zylindrischen Ausgestaltung dem Innendurchmesser des Ansaugkanals 18 entspricht, ist in dem Ansaugkanal 18 verschiebbar geführt. In beiden Stellungen, die dem ersten oder dem zweiten Betriebszustand entsprechen, ist stets nur ein Ansaugen durch eine Ansaugöffnung, die Öffnung 24 oder die Öffnung 36, möglich. Um das Ansaugen von Falschluft zu vermeiden, ist in dem zweiten Betriebszustand ein Dichtring 30 vorgesehen, durch den die Öffnung 24 abgedichtet wird. Auch im ersten Betriebszustand (Darstellung in durchgezogenen Linien) ist eine Abdichtung durch Vorsehen eines Dichtrings 40 gewährleistet. Der Dichtring 40 ist am unteren Ende einer zylindrischen, topfförmigen Ausnehmung der Innenseite des Ansaugkanals 18 angeordnet.

Durch die Ausnehmung 42 ist ferner ein Ansatz bzw. eine Anlagefläche 44 ausgebildet, durch die die Lage der Schließeinrichtung in eingeschobenem Zustand, d.h. im ersten Betriebszustand, definiert ist.

In der dargestellten bevorzugten Ausführungsform der Erfindung ist von dem Schließelement 28, durch das die Öffnung 24 in den zweiten Betriebszustand (gestrichelt) geschlossen wird, eine Einspritzeinrichtung 46 getragen. Die Einspritzeinrichtung 46 spritzt den Brennstoff somit unmittelbar in den Ansaugkanal 18 ein. Dies ist in beiden Betriebszuständen der Fall, da die Einspritzeinrichtung 46 der Öffnung des Ansaugkanals 18 im ersten Betriebszustand gegenüberliegend angeordnet ist und im zweiten Betriebszustand die Einspritzdüse 48 der Einspritzeinrichtung 46 innerhalb des Ansaugkanals angeordnet ist.

Bei weiteren bevorzugten Ausführungsformen kann die Einspritzdüse auch an anderen Positionen des Saugrohrs angebracht sein. Ebenso ist es möglich, dass eine Direkteinspritzung in den Verbrennungsraum erfolgt. Bei diesen Ausführungsformen wird durch den Ansaugkanal Luft angesaugt.

## Patentansprüche

1. Saugrohranordnung für Brennkraftmaschinen, mit
einem mit einem Verbrennungsraum einer Brennkraftmaschine verbindbaren Ansaugkanal (10, 18) zum Zuführen eines Verbrennungsgemisches oder Luft,
wobei der Ansaugkanal (18) eine Hauptansaugöffnung (24) zum Zuführen von Luft in einem ersten Betriebszustand und eine in einer Seitenwand des Ansaugkanals (18) angeordneten Nebenansaugöffnung (32) zum Zuführen von Luft in einem zweiten Betriebszustand aufweist, und
einer Schließeinrichtung (20)
**dadurch gekennzeichnet, dass**
die Schließeinrichtung (20) innerhalb des Ansaugkanals (18) zum Verschließen der Hauptansaugöffnung (24) und/oder der Nebenansaugöffnung (32) verschiebbar angeordnet ist, wobei die Schließeinrichtung (20), die zwischen dem ersten und zweiten Betriebszustand hin- und herschiebbar ist und im ersten Betriebszustand die Luft durch die Schließeinrichtung (20) strömt.

2. Saugrohranordnung nach Anspruch 1, **dadurch gekennzeichnet, dass** die Schließeinrichtung (20) rohrförmig, insbesondere kreiszylindrisch angeordnet ist.

3. Saugrohranordnung nach Anspruch 1 oder 2, **dadurch gekennzeichnet, dass** die Schließeinrichtung (20) am gesamten Umfang an einer Innenwand des Ansaugkanals (18) anliegt.

4. Saugrohranordnung nach einem der Ansprüche 1 - 3, **dadurch gekennzeichnet, dass** die Schließeinrichtung (20) eine Öffnung (24) aufweist, die im ersten Betriebszustand die Hauptansaugöffnung ausbildet.

5. Saugrohranordnung nach einem der Ansprüche 1 - 4, **dadurch gekennzeichnet, dass** die Öffnung (24) der Schließeinrichtung (20) im zweiten Betriebszustand durch ein Schließelement (28) verschlossen ist.

6. Saugrohranordnung nach Anspruch 5, **dadurch gekennzeichnet, dass** das Schließelement (28) stationär ist und ein Verschließen der Öffnung (24) durch Verschieben der Schließeinrichtung (20) erfolgt.

7. Saugrohranordnung nach Anspruch 5 oder 6, **dadurch gekennzeichnet, dass** das Schließelement (28) Teil des Motorgehäuses, insbesondere der Airbox ist.

8. Saugrohranordnung nach Anspruch 5 oder 6, **dadurch gekennzeichnet, dass** das Schließelement (28) eine Einspritzeinrichtung (46) trägt.

9. Saugrohranordnung nach einem der Ansprüche 1 - 8, **dadurch gekennzeichnet, dass** die Nebenansaugöffnung (32) mit einem Ansaugstutzen (34) verbunden ist.

## Claims

1. An intake manifold arrangement for internal combustion engines, comprising:
an intake port (10, 18) for supplying a combustion mixture or air, said port being connectible with a combustion chamber of an internal combustion engine,
the intake port (18) comprising a primary intake opening (24) for supplying air, when in a first operational state, and a secondary intake opening (32) arranged in a side wall of the intake channel (18) for supplying air, when in a second operational state, and
a closing means (20),
**characterized in that**
said closing means (20) is arranged for displacement within the intake port (18) so as to close the primary intake opening (24) and/or the secondary intake opening (32), said closing means (20) being displaceable between the first and the second operational state, and that, in the first operational state, the air flows through the closing means (20).

2. The intake manifold arrangement of claim 1, **characterized in that** the closing means (20) is of tubular, in particular circular cylindrical design.

3. The intake manifold arrangement of claim 1 or 2, **characterized in that** the closing means (20) abuts on the entire circumference of the inner wall of the intake port (18).

4. The intake manifold arrangement of one of claims 1-3, **characterized in that** the closing means (20) comprises an opening (24) forming the primary intake opening in the first operational state.

5. The intake manifold arrangement of one of claims 1-4, **characterized in that**, in the second operational state, the opening (24) of the closing means (20) is closed by means of a closing element (28).

6. The intake manifold arrangement of claim 5, **characterized in that** the closing element (28) is stationary and the opening (24) is closed by displacing the closing means (20).

7. The intake manifold arrangement of claim 5 or 6, **characterized in that** the closing element (28) is part of the motor housing, especially of the air box.

8. The intake manifold arrangement of claim 5 or 6, **characterized in that** the closing element (28) carries an injection means (46).

9. The intake manifold arrangement of one of claims 1 - 8, **characterized in that** the secondary intake opening (32) is connected with an intake piece (34).

## Revendications

1. Collecteur d'admission pour moteurs à combustion interne, comprenant:
un canal d'aspiration (10, 18) apte à être relié à une chambre de combustion d'un moteur à combustion, pour l'alimentation en une mélange de combustion ou en air,
ledit canal d'aspiration (18) comprenant une ouverture d'aspiration primaire (24) pour l'alimentation en air dans un premier état de fonctionnement et une ouverture d'aspiration secondaire (32) disposée dans une paroi latéral dudit canal d'aspiration (18) pour l'alimentation en air dans un deuxième état de fonctionnement, et
un moyen de fermeture (20),
**caractérisé en ce que**
le moyen de fermeture (20) est disposé dans ledit canal d'aspiration (18) de manière déplaçable pour fermer ladite ouverture d'aspiration primaire (24) et/ou ladite ouverture d'aspiration secondaire (32), le moyen de fermeture (20) étant déplaçable entre le premier et le deuxième état de fonctionnement, et l'air s'écoulant à travers ledit moyen de fermeture (20) dans ledit premier état de fonctionnement.

2. Collecteur d'admission selon la revendication 1, **caractérisé en ce que** le moyen de fermeture (20) est tubulaire, en particulier circulaire-cylindrique.

3. Collecteur d'admission selon les revendications 1 ou 2, **caractérisé en ce que** le moyen de fermeture (20) contacte une paroi interne dudit canal d'aspiration (18) sur toute la circonférence.

4. Collecteur d'admission selon l'une quelconque des revendications 1 - 3, **caractérisé en ce que** ledit moyen de fermeture (20) comprend une ouverture (24) qui, dans le premier état de fonctionnement, forme ladite ouverture d'aspiration primaire.

5. Collecteur d'admission selon l'une quelconque des revendications 1 - 4, **caractérisé en ce que** dans le deuxième état de fonctionnement, ladite ouverture (24) du moyen de fermeture (20) est fermée par un élément de fermeture (28).

6. Collecteur d'admission selon la revendication 5, **caractérisé en ce que** ledit élément de fermeture (28) est stationnaire et l'ouverture (24) est fermée par le déplacement du moyen de fermeture (20).

7. Collecteur d'admission selon la revendication 5 ou 6, **caractérisé en ce que** ledit élément de fermeture (28) est partie du bâti moteur, en particulier de la boite à vent.

8. Collecteur d'admission selon les revendications 5 ou 6, **caractérisé en ce que** ledit élément de fermeture (28) porte un moyen d'injection (46).

9. Collecteur d'admission selon l'une quelconque des revendications 1 - 8, **caractérisé en ce que** l'ouverture d'aspiration secondaire (32) est raccordée à un tuyau d'aspiration (34).
